# EUROPEAN PATENT APPLICATION

(11) **EP 2 544 332 A2**
(43) Date of publication of application: **09.01.2013**
(21) Application number: 12175067.3
(22) Date of filing: 05.07.2012
(51) Int. Cl.: H02J 7/06, H02J 3/28, H02J 3/24, H02J 9/00

(54) **Power supply system**

(30) Priority: 08.07.2011 JP 2011152347
(71) Applicant: Sanyo Denki Co., Ltd., Tokyo 170-8451 (JP)
(72) Inventor: Okui, Yoshiaki, Tokyo 170-8451 (JP)
(74) Representative: McCartney, Jonathan William

(57) **Abstract**

A power supply system comprises a battery which can be charged/discharged, a charging/discharging apparatus which charges/discharges the battery, and a charging/discharging power limit controller which outputs a charging/discharging power limit control signal obtained by amplifying a deviation between an output voltage command signal of the battery and a detected output voltage signal obtained by detecting an output voltage of the battery, wherein and the charging/discharging apparatus includes a charging/discharging controller which controls of charging/discharging power of the battery based on the charging/discharging power limit control signal.

## Description

### CROSS-REFERENCE TO RELATED APPLICATION

This application is based on Japanese Patent Application No. 2011-152347 filed on July 8, 2011, the contents of which are incorporated herein by reference.

### BACKGROUND

### 1. Technical Field

The present invention relates to a power supply system.

### 2. Description of Related Art

In a system that brings a battery into a fully charged state, such as an uninterruptible power supply, battery charging is conventionally conducted by a charging system with a charging scheme under CCCV (Constant Current Constant Voltage) control.

In such a conventional charging system under the CCCV control, first, the charging current is controlled to become constant and charging is conducted by using the controlled current. When the output voltage of the battery approaches the output voltage in the fully-charged state, the charging voltage is controlled to become constant, and the charging is conducted by changing over to the charging using the controlled voltage. By charging the battery under the CCCV control, it is possible to shorten the charging time and prevent lowering of the charging power quantity caused by a voltage drop due to the internal impedance of the battery.

See Unexamined Japanese Patent Publication No. 2003-153436.

However, depending on the purpose of the charging system, the battery is used in an intermediate range of SOC (State Of Charge), and charging/discharging is repeated at irregular intervals in some cases. If the output voltage of the battery exceeds a predetermined voltage variation range, charging/discharging of the battery is stopped regardless of the charging/discharging current.

If the conventional charging system under the CCCV control is applied for such a purpose, charging/discharging of the battery is stopped when the output voltage of the battery has exceeded a voltage variation range due to a voltage drop caused by the charging/discharging current and the internal impedance of the battery. Therefore, there is a problem that the charging/discharging power quantity the battery inherently possesses cannot be utilized sufficiently.

### SUMMARY

The present invention has been made in order to solve such a problem. An object of the present invention is to control the charging/discharging power of a battery by using a control signal based on a deviation between an output voltage of the battery and an output power command value and thereby sufficiently utilize the charging/discharging power quantity the battery inherently possesses, regardless of the internal impedance of the battery.

The object of the present invention is achieved by the following means:

A power supply system comprising: a battery which can be charged/discharged, a charging/discharging apparatus which charges/discharges the battery, and a charging/discharging power limit controller which outputs a charging/discharging power limit control signal obtained by amplifying a deviation between an output voltage command signal of the battery and a detected output voltage signal obtained by detecting an output voltage of the battery, wherein the charging/discharging apparatus includes a charging/discharging controller which controls charging/discharging power of the battery based on the charging/discharging power limit control signal.

The objects, features, and characteristics of this invention other than those set forth above will become apparent from the description given herein below with reference to preferred embodiments illustrated in the accompanying drawings.

### BRIEF DESCRIPTION OF THE DRAWINGS

FIG. 1 is a functional block diagram of a power supply system according to an embodiment of the present invention.
FIG. 2 is a schematic circuit diagram of the power supply system according to the embodiment of the present invention.
FIG. 3 is an explanation diagram showing relations between charging/discharging current and the SOC.

### DETAILED DESCRIPTION

Hereafter, a power supply system according to an embodiment of the present invention will be described in detail with reference to the drawings. Meanwhile, in the present specification, the concept of the term "amplification" is to include the case where the amplification factor is 1 or less.

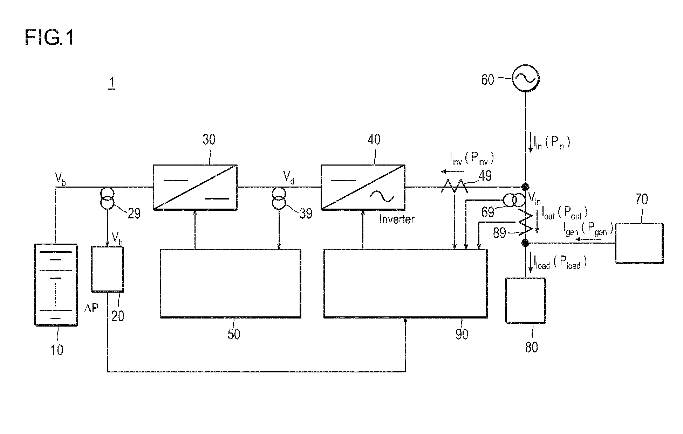

FIG. 1 is a functional block diagram of a power supply system according to an embodiment of the present invention.

The power supply system 1 according to the present embodiment includes a battery 10, a DC/DC converter (charging/discharging apparatus) 30, a charging/discharging power limit controller 20, an inverter (charging/discharging apparatus) 40, a DC/DC converter controller (charging/discharging controller) 50, a commercial power supply 60, a power generating apparatus 70, a load apparatus (load) 80, an inverter controller (charging/discharging controller) 90, a battery voltage sensor 29, a bus voltage sensor 39, an input voltage sensor 69, an inverter current sensor 49, and an output current sensor 89.

The battery 10 may be a secondary battery such as a lead battery or a lithium ion battery. However, the battery 10 is not restricted to it, but may be an EDLC (Electric Double Layer Capacitor). In general, these devices have internal impedance.

The DC/DC converter 30 boosts an output voltage (hereafter referred to as "battery voltage") V_{b} of the battery 10 and generates a bus voltage V_{d}. If power is supplied from the bus voltage V_{d} to the inverter 40, then the DC/DC converter 30 conducts a boosting operation for discharging the battery to control the bus voltage V_{d} to a constant value as described later.

Furthermore, if power is supplied from the inverter 40 to the bus voltage V_{d}, then the DC/DC converter 30 charges the battery to control the bus voltage V_{d} to a constant value in the same way and conducts a step-down operation.

The DC/DC converter 30 charges and discharges the battery 10 based on a DC/DC converter control signal supplied from the DC/DC converter controller 50, and thereby keeps a voltage value of the bus voltage V_{d} constant.

Charging/discharging power Pᵢₙᵥ - obtained by subtracting power P_{load} which is consumed in the load apparatus 80 from a sum of input power Pᵢₙ which is output from the commercial power supply 60 and power P_{gen} which is output from the power generating apparatus 70 - is supplied to the bus voltage V_{d} via the inverter 40. The DC/DC converter 30 can charge and discharge the battery 10 by using the charging/discharging power Pᵢₙᵥ supplied to the bus voltage V_{d}. Here, the power obtained by subtracting the power P_{gen} which is output from the power generating apparatus 70 from the power P_{load} which is consumed in the load apparatus 80 is defined as output power Pₒᵤₜ.

The DC/DC converter controller 50 performs PWM (Pulse Width Modulation) control on the DC/DC converter 30 by using the DC/DC converter control signal, so as to cause the bus voltage V_{d} detected by the bus voltage sensor 39 to follow a bus voltage command value V_{d}*.

The charging/discharging power limit controller 20 generates a charging/discharging power limit control signal ΔP based on the deviation between the battery voltage V_{b} detected by the battery voltage sensor 29 and an output voltage command value V_{b}*. The output voltage command value V_{b}* is a target value to be followed by the battery voltage V_{b}.

If the battery voltage V_{b} detected by the battery voltage sensor 29 exceeds either a lower limit value V_{bL} or an upper limit value V_{bH}, then the charging/discharging power limit controller 20 limits the detected battery voltage V_{b} to either the lower limit value V_{bL} or the upper limit value V_{bH}. And the limited battery voltage V_{b} (i.e., either the lower limit value V_{bL} or the upper limit value V_{bH}) is set as the output voltage command value V_{b}*.

On the other hand, if the battery voltage V_{b} is in a range between the lower limit value V_{bL} and the upper limit value V_{bH}, the detected battery voltage V_{b} can be set as the output voltage command value V_{b}*.

The charging/discharging power limit control signal ΔP generated by the charging/discharging power limit controller 20 is output to the inverter controller 90.

The inverter controller 90 adds the charging/discharging power limit control signal ΔP to an input power command value Pᵢₙ* which is a target power to be followed by the input power Pᵢₙ and thereby calculates a charging/discharging power command value Pᵢₙ* which is a target power to be followed by the charging/discharging power Pᵢₙᵥ.

And by dividing the calculated charging/discharging power command value Pᵢₙ* by a detected input voltage Vᵢₙ and subtracting a detected output current Iₒᵤₜ from a resultant product, the inverter controller 90 thereby calculates an inverter current command value Iᵢₙᵥ* which is a target current to be followed by an inverter current Iᵢₙᵥ flowing through the inverter 40.

If the inverter current Iᵢₙᵥ follows the inverter current command value Iᵢₙᵥ* and the battery voltage V_{b} reaches the charging/discharging limit value, then the inverter controller 90 performs the PWM control on the inverter 40 so as to cause the battery voltage V_{b} to follow the output voltage command value V_{b}* based on the charging/discharging power limit control signal ΔP. The inverter controller 90 controls the inverter 40 by using an inverter control signal.

The inverter 40 converts DC power to AC power by using the bus voltage V_{d} as a voltage source and converts the AC power to DC power.

The battery voltage sensor 29, the bus voltage sensor 39, and the input voltage sensor 69 can be constituted from any known voltage detector.

The inverter current sensor 49 and the output current sensor 89 can be constituted from a known current detector, for example, a current transformer.

The commercial power supply 60 is facilities for supplying power from an electric power company to electric power consumers.

The power generating apparatus 70 is an independent power generating apparatus which does not depend upon the commercial power supply, including any power generating apparatus such as a solar power generating apparatus or a wind power generating apparatus.

The load apparatus 80 is an apparatus driven by an AC voltage and is not restricted to anything as long as it consumes power.

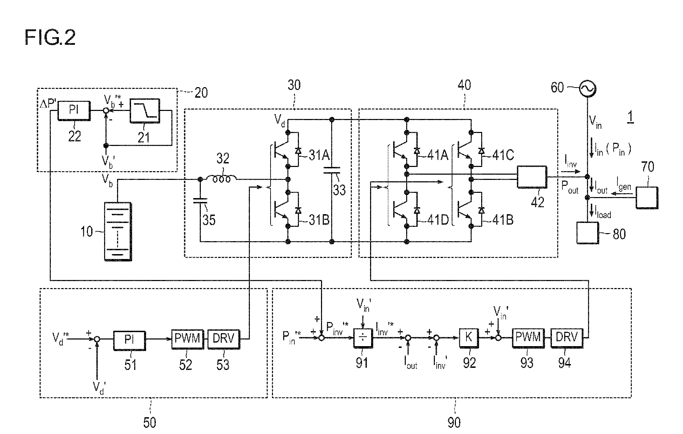

FIG. 2 is a schematic circuit diagram of the power supply system according to the embodiment of the present invention. The functions of the respective function blocks in the function block diagram shown in FIG. 1 can be implemented by a circuit shown in FIG. 2.

Meanwhile, in FIG. 2, a voltage detection apparatus such as the battery voltage sensor 29 and a current detection apparatus such as an inverter current sensor 49 are omitted for brevity.

Furthermore, in the present embodiment, functions of the charging/discharging power limit controller 20, the DC/DC converter controller 50, and the inverter controller 90, with the exception of drive units 53 and 94, are executed by operation processing using software. Therefore, each of the battery voltage sensor 29, the bus voltage sensor 39, the input voltage sensor 69, the inverter current sensor 49, and the output current sensor 89 detects a voltage or a current as a signal which can be subject to operation processing using software. For example, these sensors can detect a voltage as a signal by attenuating a detected voltage using a voltage divider and converting this voltage to a digital signal using an A/D converter. In the ensuing description, for example, the detected output voltage signal in the case where the output voltage "V_{b}" of the battery is detected by the battery voltage sensor 29 will be denoted by "V_{b}'."

As for the functions of the charging/discharging power limit controller 20, the DC/DC converter controller 50, and the inverter controller 90, however, it is a matter of course that a part or the whole of the functions may be implemented by using only hardware (for example, an electronic circuit).

In description of FIG. 2, the descriptions already made with reference to FIG. 1 will be omitted to avoid duplicated description.

The DC/DC converter 30 can be constituted from an ordinary boosting chopper circuit which is constituted from a reactor 32, a capacitor 35, IGBTs (Insulated Gate Bipolar Transistors) 31A and 31B, and a capacitor 33.

The boosting operation will be described briefly. If one IGBT 31A is brought into a conduction state and the other IGBT 31B is brought into a non-conduction state, then the current flowing from the battery 10 to the IGBT 31A is applied to the reactor 32. If from this state one IGBT 31A is changed over to a non-conduction state and the other IGBT 31B is changed over to a conduction state, then energy stored in the reactor 32 is released, and a terminal voltage of the reactor 32 rises at the terminal opposite to the terminal which was supplied with the output voltage V_{b}. The risen terminal voltage of the reactor 32 is applied to the capacitor 33 via the IGBT 31B in the conduction state, and the capacitor 33 is charged with electric charge by this boosted voltage. As a result, the boosted output voltage V_{d} is output as a DC voltage.

The boosted voltage is controlled to follow the bus voltage command value V_{d}* by the DC/DC inverter controller 50. As a result, the bus voltage V_{d} which equals to the bus voltage command value V_{d}* is output.

The DC/DC converter control signal from the DC/DC converter controller 50 is input to the base terminals of the IGBTs 31A and 31B in the DC/DC converter 30, and conduction/non-conduction states of the IGBTs 31A and 31B are controlled by the DC/DC converter control signal. The DC/DC converter control signal can be formed as a PWM signal.

The charging/discharging power limit controller 20 can be constituted from a limiter unit 21 and a PI control unit 22.

If the battery voltage V_{b} detected as the detected output voltage signal V_{b}' is lower than the lower limit value V_{bL}' , then the limiter unit 21 limits it to the lower limit value V_{bL}' and outputs the lower limit value V_{bL}' . If the detected output voltage signal V_{b}' is higher than an upper limit value V_{bH}' , then the limiter unit 21 limits it to the upper limit value V_{bH}' and outputs the upper limit value V_{bH}' . As a result, a signal which is output from the limiter unit 21 becomes a voltage signal in a range between the lower limit value V_{bL}' and the upper limit value V_{bH}' , and is utilized as an output voltage command signal V_{b}'* of the battery 10.

The PI control unit 22 conducts a proportional integral operation (amplification) on a deviation between the detected output voltage signal V_{b}' and the output voltage command signal V_{b}'*, thereby generates the charging/discharging power limit control signal ΔP which is the output deviation, and outputs the charging/discharging power limit control signal ΔP to the inverter controller 90.

In the inverter controller 90, the following processing is conducted. A charging/discharging power command signal Pᵢₙᵥ'* which is a target to be followed by a charging/discharging power signal Pᵢₒᵥ' is calculated by adding a charging/discharging power limit control signal ΔP' to an input power command signal Pᵢₙ'* which is a target to be followed by an input power signal Pᵢₙ'.

A calculation unit 91 divides the calculated charging/discharging power command signal Pᵢₙᵥ'* by a detected input voltage signal Vᵢₙ', thereby conducts conversion to an alternating current, and further subtracts a detected output current, thereby calculates an inverter current command signal Iᵢₙᵥ'* which is a target to be followed by an inverter current signal Iᵢₙᵥ'.

An amplification unit 92 is to amplify a fed-back signal. The amplification unit 92 amplifies a deviation between the inverter current command signal Iᵢₒᵥ'* and a detected inverter current signal Iᵢₙᵥ', and thereby obtains an inverter correction voltage signal. The input voltage signal Vᵢₙ' is added to the inverter correction voltage signal, and a resultant sum is output to a PWM control signal generation unit 93.

The PWM control signal generation unit 93 generates the inverter control signal for controlling the inverter 40 based on the inverter correction voltage signal with the input voltage signal Vᵢₙ' added. If the inverter current signal Iᵢₙᵥ' follows the inverter current command signal Iᵢₙᵥ'* according to the inverter control signal and if the detected output voltage signal V_{b}' has reached the charging/discharging limit value, then the inverter 40 is controlled based on the charging/discharging power limit control signal ΔP so as to cause the detected output voltage signal V_{b}' to follow the output voltage command signal V_{b}'*.

In this way, the inverter 40 and the DC/DC converter are controlled by the inverter controller 90 and the DC/DC converter controller 50, respectively. As a result, the charging/discharging power for the battery 10 is controlled with the battery voltage V_{b} in a predetermined range of the output voltage command value V_{b}*. Accordingly, it is possible to prevent the system stoppage caused by the battery voltage V_{b} exceeding the predetermined range, which is caused by a voltage drop generated by the charging/discharging current and the internal impedance of the battery. And it is possible to prevent the decrease in the charging/discharging power quantity caused by the internal impedance of the battery.

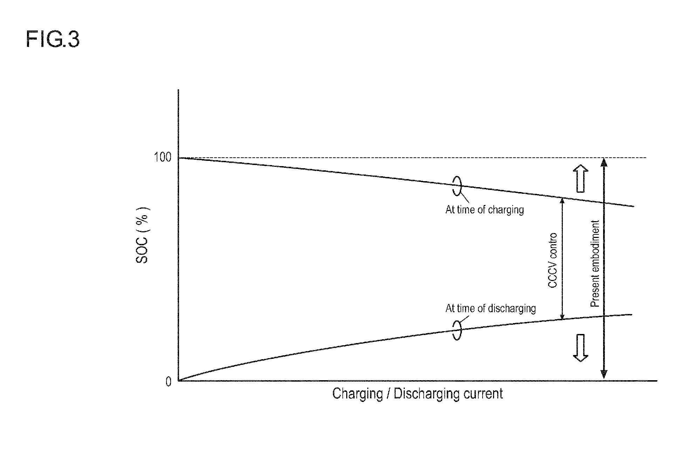

FIG. 3 is an explanation diagram showing relations between charging/discharging current and the SOC.

If charging of the battery 10 is conducted by utilizing the CC control in the conventional CCCV control charging scheme, the battery voltage V_{b} appears to increase due to a voltage drop caused by a charging current and the internal impedance of the battery 10 at the time of charging using a constant current as shown in FIG. 3. And if the charging is stopped, then the voltage drop disappears and the battery voltage V_{b} falls as compared with the apparent battery voltage V_{b} at the time of charging. At the time of discharging, an opposite operation is conducted. This phenomenon shrinks a usable SOC range of the battery 10 as indicated by thin arrows in FIG. 3. In the power supply system according to the present embodiment, the charging/discharging power is controlled to bring the output voltage of the battery 10 into the predetermined range, and consequently the influence of the internal impedance of the battery can be suppressed. In the power supply system according to the present embodiment, the usable SOC range of the battery 10 can be expanded as indicated by thick arrows in FIG. 3.

The drive unit 94 amplifies the inverter control signal until the power capable of driving the inverter 40 is obtained, and outputs a resultant signal to the inverter 40.

Heretofore, the power supply system according to the embodiment of the present invention has been described in detail. In the power supply system according to the embodiment of the present invention, the charging/discharging power is controlled by the control signal based upon the deviation between the output voltage of the battery and the output voltage command value. As a result, it is possible to suppress the influence of the internal impedance of the battery and sufficiently conduct effective use of the inherent charging/discharging power quantity of the battery.

Furthermore, since the charging/discharging power quantity can be utilized effectively, it becomes possible to reduce the capacity of the battery and reduction of the size and cost can be achieved.

## Claims

1. A power supply system comprising:
a battery which can be charged/discharged;
a charging/discharging apparatus which charges/discharges said battery; and
a charging/discharging power limit controller which amplifying a deviation between an output voltage command signal of said battery and a detected output voltage signal obtained by detecting an output voltage of said battery,
wherein said charging/discharging apparatus comprises a charging/discharging controller which controls charging/discharging power of said battery based on said charging/discharging power limit control signal.

2. The power supply system as claimed in claim 1 wherein said charging/discharging power limit controller comprises:
a limiter unit which limits said detected output voltage signal by using an upper limit value or a lower limit value and outputs a resultant signal as said output voltage command signal; and
a PI control unit which conducts a proportional integral operation on a deviation between said output voltage command signal and said detected output voltage signal, and thereby generates said charging/discharging power limit control signal.

3. The power supply system as claimed in claim 1 further comprising:
a power generating apparatus capable of generating power without depending upon a commercial power supply; and
a load supplied with power from at least one of said power generating apparatus and a commercial power supply,
wherein said charging/discharging apparatus comprises:
a DC/DC converter which boosts an output voltage of said battery and thereby generates a bus voltage; and
an inverter which rectifies alternating current power of at least one of said power generating apparatus and the commercial power supply and thereby converts the alternating current power to direct current power using said bus voltage as a voltage source at time of charging of said battery, and which converts said direct current power using said bus voltage as the voltage source to alternating current power and supplies power to said load at time of discharging from said battery.

4. The power supply system as claimed in claim 3 wherein said charging/discharging controller comprises a DC/DC converter controller which causes the bus voltage to follow a bus voltage command value based on a signal obtained by amplifying a deviation between a bus voltage command signal of said bus voltage and a detected bus voltage signal of said bus voltage, and
said charging/discharging controller controls said DC/DC converter by using said DC/DC converter controller.

5. The power supply system as claimed in claim 3 wherein
said charging/discharging controller comprises an inverter controller which performs control to cause a detected inverter current signal obtained by detecting an input/output current of said inverter to follow with an inverter current command signal as a target value, an inverter current command signal being obtained by adding a power command signal from said commercial power supply to said charging/discharging power limit control signal, subtracting an output power signal indicating output power of said commercial power supply from a resultant sum, and then dividing a resultant signal by a detected commercial voltage signal, and
said charging/discharging controller controls said inverter by using said inverter controller.

6. The power supply system as claimed in claim 4 wherein said charging/discharging controller controls said DC/DC converter as well as said inverter by using PWM.

7. The power supply system as claimed in claim 1 wherein said battery is at least any of a secondary battery, an electric double layer capacitor, and a lithium ion capacitor, and has internal impedance.
